(19) Europäisches Patentamt
European Patent Office
Office européen des brevets

(11) **EP 4 553 864 A1**

(12) **EUROPEAN PATENT APPLICATION**
published in accordance with Art. 153(4) EPC

(43) Date of publication:
**14.05.2025 Bulletin 2025/20**

(21) Application number: **23835442.7**

(22) Date of filing: **30.06.2023**

(51) International Patent Classification (IPC):
*H01F 5/06* (2006.01)    *H01F 5/00* (2006.01)
*H02K 3/38* (2006.01)

(52) Cooperative Patent Classification (CPC):
**H01F 5/00; H01F 5/06; H01F 27/28; H02K 3/38**

(86) International application number:
**PCT/JP2023/024439**

(87) International publication number:
**WO 2024/009910 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.07.2022 JP 2022108402**

(71) Applicant: **DAIKIN INDUSTRIES, LTD.**
**Osaka-shi, Osaka 530-0001 (JP)**

(72) Inventors:
• **WADA, Hiroaki**
  **Osaka-Shi, Osaka 530-0001 (JP)**

• **FUJIOKA, Seika**
  **Osaka-Shi, Osaka 530-0001 (JP)**
• **HORISAWA, Kazushi**
  **Osaka-Shi, Osaka 530-0001 (JP)**
• **KONO, Hideki**
  **Osaka-Shi, Osaka 530-0001 (JP)**
• **SUKEGAWA, Masamichi**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **RECTANGULAR WIRE, COIL, AND THERMAL SHRINKAGE TUBE**

(57)    A flat wire including a flat conductor having at least one bent portion bent in an edgewise direction and a covering layer formed on the outer periphery of the flat conductor is provided, wherein the covering layer is formed by covering the flat conductor having bent portion with a heat-shrinkable tube and shrinking the heat-shrinkable tube.

Figure 1

EP 4 553 864 A1

**Description**

TECHNICAL FIELD

The present disclosure relates to a flat wire, a coil and a heat-shrinkable tube.

BACKGROUND ART

Patent Document 1 describes an insulating electric wire having an insulating film including at least two insulating layers stacked on a conductor having a flat cross section, wherein the stacked insulating films include an enamel insulating layer made of thermosetting resin on the outer periphery of the conductor and an extruded insulating layer made of thermoplastic resin outside the enamel insulating layer, wherein the enamel insulating layer has a thickness of 50 $\mu$m or more, and the total thickness (T) and the relative dielectric constant ($\varepsilon$) at 100°C of the stacked insulating films, and the maximum thickness (T max) and the maximum value ($\varepsilon$ max) and the minimum value ($\varepsilon$ min) of the relative dielectric constant at 100°C of one layer in the stacked insulating layers satisfy all of the following relations.

Patent Document 2 describes a flat magnet wire including a flat conductor and a covering layer formed of heat-shrinkable tube for forming a covering layer of the flat magnet wire, which contains a copolymer including tetrafluoroethylene unit and a fluoroalkyl vinyl ether unit, formed on the periphery of the flat conductor.

RELATED ART

PATENT DOCUMENT

Patent Document 1: International Publication No. WO 2017-175516
Patent Document 2: Japanese Patent Laid-Open No. 2021-2458

SUMMARY OF THE INVENTION

PROBLEM TO BE SOLVED BY THE INVENTION

An object of the present disclosure is to provide a flat wire comprising a flat conductor having at least one bent portion bent in an edgewise direction and a covering layer, and having a low partial discharge inception voltage.

MEANS FOR SOLVING THE PROBLEM

According to a first point of view of the present disclosure, provided is a flat wire including a flat conductor having at least one bent portion bent in an edgewise direction and a covering layer formed on the outer periphery of the flat conductor, wherein the covering layer is formed by covering the flat conductor having the bent portions with a heat-shrinkable tube and shrinking the heat-shrinkable tube.

EFFECTS OF THE INVENTION

According to the present disclosure, it is possible to provide a flat wire comprising a flat conductor having at least one bent portion bent in the edgewise direction and a covering layer and having a low partial discharge inception voltage.

BRIEF DESCRIPTION OF THE DRAWINGS

Figure 1 is a front view and a top view showing a flat wire in an embodiment.
Figure 2 is a cross-sectional view showing a flat wire in an embodiment.
Figure 3 is a cross-sectional view showing a heat-shrinkable tube in an embodiment.
Figure 4 is a schematic view illustrating a method for bending a flat magnet wire or a flat conductor in Examples and Comparative Examples.

DESCRIPTION OF EMBODIMENTS

A specific embodiment of the present disclosure is described in detail as follows, though the present disclosure is not limited to the following embodiment.

(Flat wire)

Patent Document 1 describes that use of a conductor having a rectangular (flat) cross section allows a space factor of the conductor in a stator slot to be increased. Further, Patent Document 1 describes that, since an insulated wire having the structure described above, it is possible to provide an insulated wire, a coil and an electrical or electronic equipment having high dielectric strength (dielectric breakdown voltage) and a high partial discharge inception voltage even in case of having a thick enamel insulating layer, and having excellent mechanical characteristics such as heat resistance and notched edgewise bending.

Further, in Patent Document 2, by covering a flat conductor with a heat-shrinkable tube for forming a covering layer of a flat magnet wire containing a copolymer containing tetrafluoroethylene unit and a fluoroalkyl vinyl ether unit, and heat-shrinking the heat-shrinkable tube for forming a covering layer of a flat magnet wire, a covering layer is formed around the flat conductor. Thereby, a covering layer in firm contact with the flat conductor can be formed and even when bent in an edgewise direction, bulging and cracking is unlikely to occur in the covering layer in both of the bent outer peripheral region and the bent inner peripheral region.

However, in the case of bending a flat conductor having a covering layer in an edgewise direction to form a bent portion bent in an edgewise direction as in Patent Document 1 and in Patent Document 2, the covering layer of the inner periphery of the bent portion shrinks larger than the covering layer of the outer periphery of the bent portion, so that it has been found that a gap occurs between the flat conductor and the covering layer through careful observation using a magnifying glass.

In contrast, the flat wire of the present disclosure (flat magnet wire) includes a flat conductor having at least one bent portion bent in an edgewise direction and a covering layer formed on the outer periphery of the flat conductor, and the covering layer is formed by covering the flat conductor having a bent portion with a heat-shrinkable tube and shrinking the heat-shrinkable tube. Thereby, the heat-shrinkable tube shrinks along a shape of the bent portion bent in an edgewise direction, so that the covering layer thus formed comes close contact with the bent portion of the flat conductor without a gap. Accordingly, the flat wire of the present disclosure has no gap between the flat conductor and the covering layer, even though having at least one bent portion in an edgewise direction.

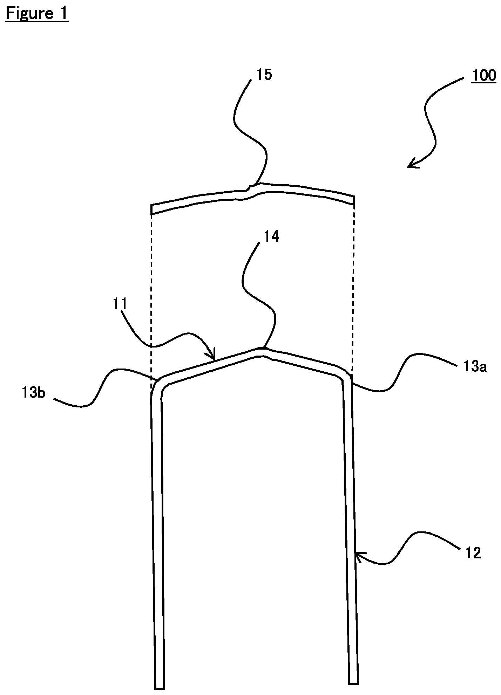

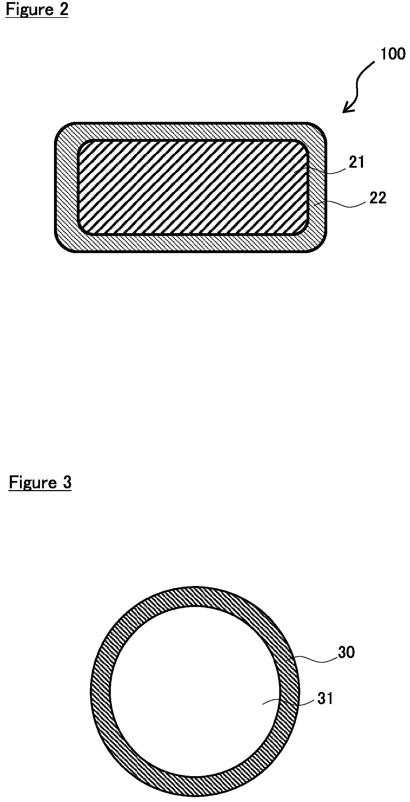

Figure 1 is a front view and a top view showing a flat wire in an embodiment. Figure 2 is a cross-sectional view showing a flat wire in an embodiment. A flat wire 100 shown in Figure 1 is a flat wire (segment coil) to form a coil when inserted in each slot of a rotating electric machine. The flat wire 100 is constructed by bending a flat wire having a prescribed length into a U-shape in a flatwise direction. As shown in Figure 2, the flat wire 100 includes a flat conductor 21 and a covering layer 22 formed on an outer periphery of the flat conductor 21.

As shown in Figure 1, the flat wire 100 has an approximately U-shape and includes a curved part 11 and a slot insertion part 12 extending from both ends of the curved part 11. In a part connecting the curved part 11 to the slot insertion part 12, shoulder parts 13a and 13b are formed by bending the flat conductor in an edgewise direction. Further, in the curved part 11, a protrusion part 14 is formed by bending the flat conductor in an edgewise direction, and a crank-shaped part 15 is formed by bending the flat conductor in a flatwise direction. The flat wire 100 allows the flat conductor 21 and the covering layer 22 to be in perfectly close contact without a gap, in any of the shoulder part 13a and the shoulder part 13b, and in the protrusion part 14. In other words, the covering layer included in the flat wire of the present disclosure is in close contact with the bent portion of the flat conductor, which is different from the conventional flat wire having a bent portion. Further, since the flat wire of the present disclosure has no gap between the flat conductor and the covering layer, with the flat conductor and the covering layer in close contact, a partial discharge inception voltage lower than that of a conventional flat wire can be exhibited.

Next, the constitutions of the heat-shrinkable tube for forming the covering layer, the flat conductor, another layer optionally disposed, etc. are described in more detail.

(Heat-shrinkable tube)

In order to form a covering layer that covers the flat conductor having at least one bent portion bent in an edgewise direction, a heat-shrinkable tube is used.

Figure 3 is a cross-sectional view showing a heat-shrinkable tube in an embodiment. As shown in Figure 3, a heat-shrinkable tube 30 includes a hollow 31. Since the inner diameter of the hollow 31 is made larger than the outer diameter of the flat conductor, the flat conductor having a bent portion (not shown in drawing) can be smoothly inserted into the hollow 31 and the flat conductor can be covered with the heat-shrinkable tube 30. By heat-shrinking the heat-shrinkable tube 30 that covers the flat conductor, a flat wire 100 including the flat conductor 21 and the covering layer 22 that are in perfectly close contact without a gap can be produced.

The material that constitutes the heat-shrinkable tube is not limited as long as the material shrinks by heat, and examples thereof include a thermoplastic resin.

Examples of the thermoplastic resin include a fluororesin, a polyaryl ether ketone (PAEK) resin, a thermoplastic polyimide resin, a thermoplastic polyamide imide resin, a polyamide resin, a polyolefin resin, a modified polyolefin resin, a polyvinyl resin, polyester, an ethylene/vinyl alcohol copolymer, a polyacetal resin, a polyurethane resin, a polyphenylene oxide resin, a polycarbonate resin, an acrylic-based resin, a styrene-based resin, an acrylonitrile/butadiene/styrene resin (ABS), a vinyl chloride-based resin, a cellulose-based resin, a polysulfone resin, a polyether sulfone resin (PES), a polyether imide resin, and a polyphenylene sulfide resin.

From the viewpoint of electrical characteristics, the relative dielectric constant of the thermoplastic resin is preferably 4.0 or less, more preferably 3.4 or less, still more preferably 2.9 or less, further preferably 2.4 or less, particularly preferably 2.1 or less, and preferably 1.80 or more. The relative dielectric constant is a value obtained by measuring the changes in the resonant frequency and the electric field intensity at a temperature of 20 to 25°C using a network analyzer HP8510C (manufactured by Hewlett Packard Enterprise) and a cavity resonator.

As the thermoplastic resin, at least one selected from the group consisting of a fluororesin and a polyaryl ether ketone (PAEK) resin is preferred in particular, and a fluororesin is more preferred. The heat-shrinkable tube containing a fluororesin allows a covering layer excellent in electrical characteristics to be formed.

Examples of the fluororesin include a polytetrafluoroethylene, a tetrafluoroethylene (TFE)/fluoroalkyl vinyl ether (FAVE) copolymer, a tetrafluoroethylene (TFE)/hexafluoropropylene (HFP) copolymer, a TFE/ethylene copolymer [ETFE], a TFE/ethylene/HFP copolymer, an ethylene/chlorotrifluoroethylene (CTFE) copolymer [ECTFE], polychlorotrifluoroethylene [PCTFE], a CTFE/TFE copolymer, polyvinylidene fluoride [PVdF], a TFE/vinylidene fluoride (VdF) copolymer [VT], polyvinyl fluoride [PVF], a TFE/VdF/CTFE copolymer [VTC], and a TFE/HFP/VdF copolymer.

From the viewpoints of heat resistance and electrical characteristics, the fluororesin is preferably one selected from the group consisting of a polytetrafluoroethylene, a TFE/FAVE copolymer and a TFE/HFP copolymer.

From the viewpoints of easy production of a heat-shrinkable tube by extrusion forming and formation of a covering layer in further firm contact with a flat conductor, the fluororesin is preferably a melt-fabricable fluororesin. In the present disclosure, the term "melt-fabricable" means that a polymer can be melted and processed using a conventional processing device such as an extruder and an injection molding machine. Accordingly, the melt-fabricable fluororesin has a melt flow rate measured by the following measurement method of usually 0.01 to 500 g/10 minutes.

The melt flow rate of the fluororesin is preferably 0.1 to 70 g/10 minutes, more preferably 60 g/10 minutes or less, still more preferably 50 g/10 minutes or less, particularly preferably 40 g/10 minute or less, and most preferably 30 g/10 minutes or less. With a melt flow rate of the fluororesin in the range, a heat-shrinkable tube and a covering layer having a uniform thickness and excellent mechanical strength can be easily obtained.

Further, the melt flow rate of the fluororesin may be less than 10 g/10 minutes. The heat-shrinkable tube allows a covering layer to be formed on the flat conductor by heat-shrinking, so that a high melt flowability of the fluororesin as in the case of forming a covering layer by extrusion forming is not required. Accordingly, even with a fluororesin having a small melt flow rate, a covering layer excellent mechanical strength can be formed without spoiling processability during covering.

The melting point of the fluororesin is preferably 200 to 322°C, more preferably 220°C or more, still more preferably 240°C or more, further preferably 260°C or more, particularly preferably 280°C or more, and more preferably 320°C or less.

The melting point can be measured using a differential scanning calorimeter [DSC].

In the present disclosure, the melt flow rate of the fluororesin is a value obtained as the mass of polymer flowing out from a nozzle having an inner diameter of 2.1 mm and a length of 8 mm per 10 minutes (g/10 minutes) at 372°C under a load of 5 kg, using a melt indexer (manufactured by Yasuda Seiki Seisakusho, Ltd.) according to ASTM D1238.

From the viewpoints of excellence in heat resistance, moldability and electrical characteristics and formability of a covering layer in further firm contact with a flat conductor, the fluororesin is preferably at least one selected from the group consisting of a TFE/FAVE copolymer and a TFE/HFP copolymer.

The TFE/FAVE copolymer is a copolymer containing a tetrafluoroethylene (TFE) unit and a fluoroalkyl vinyl ether (FAVE) unit.

Examples of the FAVE that constitutes an FAVE unit include at least one selected from the group consisting of a monomer represented by a general formula (1):

$$CF_2=CFO(CF_2CFY^1O)_p\text{-}(CF_2CF_2CF_2O)_q\text{-}Rf \qquad (1)$$

wherein $Y^1$ represents F or $CF_3$, Rf represents a perfluoroalkyl group having 1 to 5 carbon atoms, p represents an integer of 0 to 5, and q represents an integer of 0 to 5; and

a monomer represented by a general formula (2):

$$CFX=CXOCF_2OR^1 \qquad (2)$$

wherein X are the same or different and represent H, F or $CF_2$; and $R^1$ represents a linear or branched fluoroalkyl group having 1 to 6 carbon atoms, which may contain 1 to 2 of at least one type of atoms selected from the group consisting of H, Cl, Br and I; or a cyclic fluoroalkyl group having 5 or 6 carbon atoms, which may contain 1 to 2 of at least one type of atoms selected from the group consisting of H, Cl, Br and I.

In particular, FAVE is preferably a monomer represented by the general formula (1), more preferably one selected from the group consisting of perfluoro(methyl vinyl ether), perfluoro(ethyl vinyl ether) (PEVE), and perfluoro(propyl vinyl ether) (PPVE), still more preferably one selected from the group consisting of PEVE and PPVE, and particularly preferably PPVE.

From the viewpoint of forming a covering layer in further firm contact with the flat conductor, the FAVE unit content in the TFE/FAVE copolymer relative to all the monomer units is preferably 0.4 to 4.0 mol%, more preferably 1.1 mol% or more, still more preferably 1.3 mol% or more, further preferably 1.4 mol% or more, particularly preferably 1.5 mol% or more, most preferably 1.8 mol% or more, and more preferably 3.2 mol% or less, still more preferably 2.8 mol% or less, particularly preferably 2.5 mol% or less, particularly preferably 2.4 mol% or less.

From the viewpoint of forming a covering layer in further firm contact with the flat conductor, the TFE unit content in the TFE/FAVE copolymer relative to all the monomer units is preferably 96.0 to 99.6 mol%, more preferably 96.8 mol% or more, still more preferably 97.2 mol% or more, further preferably 97.5 mol% or more, particularly preferably 97.6 mol% or more, and more preferably 98.9 mol% or less, still more preferably 98.7 mol% or less, further preferably 98.6 mol% or less, particularly preferably 98.5 mol% or less, most preferably 98.2 mol% or less.

In the present disclosure, the content of each monomer unit in the copolymer is measured by $^{19}$F-NMR method.

The TFE/FAVE copolymer may contain a monomer unit derived from a monomer copolymerizable with TFE and FAVE. In that case, the content of the monomer copolymerizable with TFE and FAVE relative to all the monomer units of the TFE/FAVE copolymer is preferably 0 to 3.6 mol%, more preferably 0.1 to 2.2 mol%, still more preferably 0.2 to 1.0 mol%.

Examples of the monomer copolymerizable with TFE and FAVE include HFP, a vinyl monomer represented by $CZ^1Z^2=CZ^3(CF_2)_nZ^4$, wherein $Z^1$, $Z^2$ and $Z^3$ are the same or different and represent H or F; $Z^4$ represents H, F or Cl; and n represents an integer of 2 to 10; an alkyl perfluoro vinyl ether derivative represented by $CF_2=CF-OCH_2-Rf^1$, wherein $Rf^1$ represents a perfluoroalkyl group having 1 to 5 carbon atoms; and a monomer having a functional group. In particular, HFP is preferred.

The TFE/FAVE copolymer is preferably one selected from the group consisting of a copolymer including a TFE unit and an FAVE unit only, and the TFE/HFP/FAVE copolymer; and more preferably the copolymer including a TFE unit and an FAVE unit only.

From the viewpoints of heat resistance and stress crack resistance, the melting point of the TFE/FAVE copolymer is preferably 280 to 322°C, more preferably 285°C or more, and more preferably 315°C or less, still more preferably 310°C or less. The melting point may be measured by using a differential scanning calorimeter [DSC].

The glass transition temperature (Tg) of the TFE/FAVE copolymer is preferably 70 to 110°C, more preferably 80°C or more, and more preferably 100°C or less. The glass transition temperature may be measured by dynamic viscoelasticity measurement.

From the viewpoint of electrical characteristics, the relative dielectric constant of the TFE/FAVE copolymer is preferably 2.4 or less, more preferably 2.1 or less, and the lower limit is preferably 1.8 or more, though not limited. The relative dielectric constant is a value obtained by measuring the changes in the resonant frequency and the electric field intensity at a temperature of 20 to 25°C using a network analyzer HP8510C (manufactured by Hewlett Packard Enterprise) and a cavity resonator.

The TFE/HFP copolymer is a copolymer containing tetrafluoroethylene (TFE) unit and hexafluoropropylene (HFP) unit.

From the viewpoint of formability of the covering layer in further firm contact with the flat conductor, the HFP unit content in the TFE/HFP copolymer relative to all the monomer units is preferably 0.1 mol% or more, more preferably 0.7 mol% or more, still more preferably 1.3 mol% or more, and preferably 22 mol% or less, more preferably 11 mol% or less.

From the viewpoint of formability of the covering layer in further firm contact with the flat conductor, the TFE unit content in the TFE/HFP copolymer relative to all the monomer units is preferably 78 mol% or more, more preferably 89 mol% or more, and preferably 99.9 mol% or less, more preferably 99.3 mol% or less, still more preferably 98.7 mol% or less.

The TFE/HFP copolymer may contain a monomer unit derived from a monomer copolymerizable with TFE and HFP. In that case, the content of the monomer copolymerizable with TFE and HFP relative to all the monomer units of the TFE/HFP copolymer is preferably 0 to 21.9 mol%, more preferably 0.1 to 5.0 mol%, still more preferably 0.1 to 1.0 mol%.

Examples of the monomer copolymerizable with TFE and HFP include FAVE, a vinyl monomer represented by $CZ^1Z^2=CZ^3(CF_2)_nZ^4$, wherein $Z^1$, $Z^2$ and $Z^3$ are the same or different and represent H or F; $Z^4$ represents H, F or Cl; and n represents an integer of 2 to 10; an alkyl perfluoro vinyl ether derivative represented by $CF_2=CF-OCH_2-Rf^1$, wherein $Rf^1$ represents a perfluoroalkyl group having 1 to 5 carbon atoms; and a monomer having a functional group. In particular, FAVE is preferred.

The melting point of the TFE/HFP copolymer is preferably 200 to 322°C, more preferably 210°C or more, still more preferably 220°C or more, and more preferably less than 300°C, still more preferably 280°C or less.

The glass transition temperature (Tg) of the TFE/HFP copolymer is preferably 60 to 110°C, more preferably 65°C or more, and more preferably 100°C or less.

From the viewpoint of formability of the covering layer in further firm contact with the flat conductor, it is preferable that the fluororesin have a functional group. Due to having a functional group, the fluororesin is able to form a covering layer in further firm contact with the flat conductor.

The functional group is preferably at least one selected from the group consisting of a carbonyl group-containing group, an amino group, a hydroxy group, a $-CF_2H$ group, an olefinic group, an epoxy group and an isocyanate group.

The carbonyl group-containing group is a group that contains a carbonyl group ($-C(=O)-$) in the structure. Examples of the carbonyl group-containing group include:

a carbonate group [$-O-C(=O)-OR^3$, wherein $R^3$ is an alkyl group having 1 to 20 carbon atoms or an alkyl group having 2 to 20 carbon atoms that contains an etheric oxygen atom],

an acyl group [$-C(=O)-R^3$, wherein $R^3$ is an alkyl group having 1 to 20 carbon atoms or an alkyl group having 2 to 20 carbon atoms that contains an etheric oxygen atom],
a haloformyl group [$-C(=O)X^5$, wherein $X^5$ is a halogen atom],
a formyl group [$-C(=O)H$],
a group represented by a formula: $-R^4-C(=O)-R^5$, wherein $R^4$ is a divalent organic group having 1 to 20 carbon atoms, and $R^5$ is a monovalent organic group having 1 to 20 carbon atoms,
a group represented by a formula: $-O-C(=O)-R^6$, wherein $R^6$ is an alkyl group having 1 to 20 carbon atoms, or an alkyl group having 2 to 20 carbon atoms that contains an etheric oxygen atom,
a carboxyl group [$-C(=O)OH$],
an alkoxycarbonyl group [$-C(=O)OR^7$, wherein $R^7$ is a monovalent organic group having 1 to 20 carbon atoms],
a carbamoyl group [$-C(=O)NR^8R^9$, wherein $R^8$ and $R^9$ may be the same or different, being a hydrogen atom or a monovalent organic group having 1 to 20 carbon atoms], and
an acid anhydride bond [$-C(=O)-O-C(=O)-$].

Specific examples of $R^3$ include a methyl group, an ethyl group, a propyl group, an isopropyl group and a butyl group. Specific examples of $R^4$ described above include a methylene group, a $-CF_2-$ group and a $-C_6H_4-$ group, and specific examples of $R^5$ include a methyl group, an ethyl group, a propyl group, an isopropyl group and a butyl group. Specific examples of $R^7$ include a methyl group, an ethyl group, a propyl group, an isopropyl group and a butyl group. Further, specific examples of $R^8$ and $R^9$ include a hydrogen atom, a methyl group, an ethyl group, a propyl group, an isopropyl group, a butyl group and a phenyl group.

The hydroxy group is a group represented by -OH or a group containing a group represented by -OH. In the present disclosure, -OH that constitutes a carboxyl group is not included in the hydroxy group. Examples of the hydroxy group include -OH, a methylol group and an ethylol group.

The olefinic group is a group having a carbon-carbon double bond. Examples of the olefinic group include a functional group represented by the following formula:

$-CR^{10}=CR^{11}R^{12}$

wherein $R^{10}$, $R^{11}$ and $R^{12}$ may be the same or different, being a hydrogen atom, a fluorine atom or a monovalent organic group having 1 to 20 carbon atoms,
and at least one selected from the group consisting of $-CF=CF_2$, $-CH=CF_2$, $-CF=CHF$, $-CF=CH_2$ and $-CH=CH_2$ is preferred.

The isocyanate group is a group represented by $-N=C=O$.

From the viewpoint of formability of the covering layer in further firm contact with the flat conductor, the number of functional groups of the fluororesin is preferably 5 to 1,300 per 1,000,000 carbon atoms. The number of functional groups per $10^6$ carbon atom is more preferably 50 or more, still more preferably 100 or more, particularly preferably 200 or more, and more preferably 1,000 or less, still more preferably 800 or less, particularly preferably 700 or less, most preferably 500 or less.

Also, from the viewpoint of formability of the covering layer excellent in electrical characteristics, the number of functional groups of the fluororesin may be less than 5 piece per $10^6$ carbon atoms.

The functional group includes a functional group present at an end of the main chain or at an end of the side chain of a copolymer (fluororesin), and a functional group present in the main chain or in the side chain, suitably present at an end of the main chain. Examples of the functional group include $-CF=CF_2$, $-CF_2H$, $-COF$, $-COOH$, $-COOCH_3$, $-CONH_2$, $-CH_2OH$, and at least one selected from the group consisting of $-CF_2H$, $-COF$, $-COOH$, $-COOCH_3$ and $-CH_2OH$ is preferred. The $-COOH$ includes a dicarboxylic acid anhydride ($-CO-O-CO-$) which is formed through bonding of two $-COOH$.

In identification of the type of the functional group and measurement of the number of functional groups, infrared spectroscopy may be used.

Specifically, the number of functional groups are measured by the following method. First, a copolymer is melted at 330 to 340°C for 30 minutes, and compression molded into a film having a thickness of 0.20 to 0.25 mm. The film is analyzed by Fourier transform infrared spectroscopy to obtain an infrared absorption spectrum of the copolymer. A differential spectrum, which is a difference from a base spectrum of completely fluorinated polymer having no functional group, is then obtained. From the absorption peak of a specific functional group in the differential spectrum, the number N of functional group per $1\times10^6$ carbon atoms in the copolymer is calculated according to the following formula (A) .

$$N=I\times K/t \qquad (A)$$

I: absorbance
K: correction coefficient
T: film thickness (mm)

For reference sake, the absorption frequency, molar absorption coefficient and correction coefficient of the functional groups of the present disclosure are shown in Table 1. Incidentally, the molar absorption coefficient is determined from the FT-IR measurement data of a low molecular weight model compound.

[Table 1]

**Table 1**

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

Incidentally, the absorption frequency of each of $-CH_2CF_2H$, $-CH_2COF$, $-CH_2COOH$, $-CH_2COOCH_3$ and $-CH_2CONH_2$ is lower by several tens of kayser (cm$^{-1}$) than the absorption frequency shown in Table for each of $-CF_2H$, $-COF$, free $-COOH$ and bonded $-COOH$, $-COOCH_3$ and $-CONH_2$.

Accordingly, for example, the number of functional groups -COF is a total of the number of functional groups determined from the absorption peak at an absorption frequency of 1883 cm$^{-1}$ caused by $-CF_2COF$ and the number of functional groups determined from the absorption peak at an absorption frequency of 1840 cm$^{-1}$ caused by $-CH_2COF$.

The number of functional groups may be a total number of $-CF=CF_2$, $-CF_2H$, $-COF$, $-COOH$, $-COOCH_3$, $-CONH_2$ and $-CH_2OH$, or may be a total number of $-CF_2H$, $-COF$, $-COOH$, $-COOCH_3$ and $-CH_2OH$.

The functional group is introduced into a fluororesin (copolymer), for example, from a chain transfer agent or a polymerization initiator used in production of the fluororesin. For example, in the case of using an alcohol as chain transfer agent, or using a peroxide having a -CH$_2$OH structure as polymerization initiator, -CH$_2$OH is introduced into an end of the main chain of the copolymer. Also, in the case of polymerizing a monomer having a functional group, the functional group is introduced into an end of the side chain of the copolymer. The fluororesin may contain a unit derived from a monomer having a functional group.

Examples of the monomer having a functional group include a cyclic hydrocarbon monomer having a dicarboxylic acid anhydride group (-CO-O-CO-) and having a polymerizable unsaturated group in a ring described in Japanese Patent Laid-Open No. 2006-152234, and a monomer having a functional group (f) described in International Publication No. WO 2017/122743. In particular, examples of the monomer having a functional group include a monomer having a carboxy group (maleic acid, itaconic acid, citraconic acid, undecylenic acid, etc.); a monomer having an acid anhydride group (itaconic acid anhydride, citraconic acid anhydride, 5-nobornene-2,3-dicarboxylic acid anhydride, maleic acid anhydride, etc.) and a monomer having a hydroxy group or an epoxy group (hydroxybutyl vinyl ether, glycidyl vinyl ether, etc.).

The fluororesin may be produced, for example, by a conventionally known method such as appropriately mixing a monomer as constituent unit and an additive such as polymerization initiator to perform emulsion polymerization or suspension polymerization.

Further, a polyaryl ether ketone (PAEK) resin may be used as thermoplastic resin. Since the heat-shrinkable tube contains a PAEK resin, a covering layer excellent in heat resistance can be obtained.

The PAEK resin is not limited as long as it contains a repeating unit including an arylene group, an ether group [-O-] and a carbonyl group [-C(=O)-], and examples thereof include a resin containing a repeating unit represented by any of the following formulas (a1) to (a5):

$$[-Ar-O-Ar-C(=O)-] \qquad (a1)$$

$$[-Ar-O-Ar-C(=O)-Ar-C(=O)-] \qquad (a2)$$

$$[-Ar-O-Ar-O-Ar-C(=O)-] \qquad (a3)$$

$$[-Ar-O-Ar-C(=O)-Ar-O-Ar-C(=O)-Ar-C(=O)-] \qquad (a4)$$

$$[-Ar-O-Ar-O-Ar-C(=O)-Ar-C(=O)-] \qquad (a5)$$

wherein Ar represents a divalent aromatic hydrocarbon cyclic group that may have a substituent.

Examples of the divalent aromatic hydrocarbon cyclic group represented by Ar include a phenylene group (such as o-, m- or p-phenylene group), an arylene group having 6 to 10 carbon atoms such as naphthylene group, a biarylene group (each arylene group has 6 to 10 carbon atoms) such as biphenylene group (such as 2,2'-biphenylene group, 3,3'-biphenylene group, and 4,4'-biphenylene group), and a terarylene group (each arylene group has 6 to 10 carbon atoms) such as o-, m- or p-terphenylene group. These aromatic hydrocarbon cyclic groups may have a substituent such as a halogen atom, an alkyl group (a linear or branched chain alkyl group having 1 to 4 carbon atoms such as methyl group), a haloalkyl group, a hydroxyl group, an alkoxyl group (a linear or branched chain alkoxyl group having 1 to 4 carbon atoms such as methoxy group), a mercapto group, an alkylthio group, a carboxyl group, a sulfo group, an amino group, an N-substituted amino group, and a cyano group. Incidentally, in the repeating units (a1) to (a5), the type of each Ar may be the same or different from each other. A preferred Ar is a phenylene group (e.g., p-phenylene group) or a biphenylene group (e.g., 4,4'-biphenylene group).

Examples of the resin having a repeating unit (a1) include polyether ketone (e.g., "PEEK-HT" manufactured by Victrex plc). Examples of the resin having a repeating unit (a2) include polyether ketone ketone (e.g., "PEKK" manufactured by Arkema + Oxford Performance Materials, Inc.). Examples of the resin having a repeating unit (a3) include polyether ether ketone (e.g., "VICTREX PEEK" manufactured by Victrex plc, "Vestakeep (registered trademark)" manufactured by Evonik Industries AG, "Vestakeep-J" manufactured by Daicel-Evonik Ltd., "KetaSpire (registered trademark)" manufactured by Solvay Specialty Polymers), and polyether-diphenyl-ether-phenyl-ketone-phenyl (e.g., "Kadel (registered trademark)" manufactured by Solvay Specialty Polymers). Examples of the resin having a repeating unit (a4) include polyether ketone ether ketone ketone (e.g., "VICTREX ST" manufactured by Victrex plc). Examples of the resin having a repeating unit (a5) include polyether ether ketone ketone.

In the repeating unit including an arylene group, an ether group and a carbonyl group, the ratio between an ether segment (E) and a ketone segment (K) is, for example, E/K=0.5 to 3, preferably about 1 to 2.5. The ether segment imparts flexibility to a molecular chain, and the ketone segment imparts rigidity to a molecular chain. Accordingly, with increase of the ether segment, the crystallization rate increases, and the finally achievable degree of crystallinity increases, while with increase of the ketone segment, the glass transition temperature and the melting point tend to rise. These PAEK resins may be used alone or in combination.

Among these PAEK resins, a resin having any of the repeating units (a1) to (a3) is preferred. For example, as the PAEK resin, at least one resin selected from the group consisting of polyether ketone, polyether ether ketone, polyether ketone ketone, and polyether ketone ether ketone ketone is preferred.

In particular, from the viewpoint of excellent balance between the level of the glass transition temperature and melting point and the crystallization rate, a PAEK resin having the repeating unit (a3) is more preferred, and polyether ether ketone is particularly preferred.

It is preferable that the PAEK resin have a melt viscosity of 0.01 to 4.0 $kNsm^{-2}$ at 60 $sec^{-1}$ and 390°C. The lower limit of the melt viscosity is preferably 0.05 $kNsm^{-2}$, more preferably 0.10 $kNsm^{-2}$, still more preferably 0.15 $kNsm^{-2}$. The upper limit of the melt viscosity is preferably 2.5 $kNsm^{-2}$, more preferably 1.5 $kNsm^{-2}$, still more preferably 1.0 $kNsm^{-2}$, particularly preferably 0.5 $kNsm^{-2}$, most preferably 0.4 $kNsm^{-2}$. The melt viscosity of the PAEK resin is measured according to ASTM D3835.

The glass transition temperature of the PAEK resin is preferably 130°C or more, more preferably 135°C or more, still more preferably 140°C or more. The glass transition temperature is measured by a differential scanning calorimetry (DSC) device.

The melting point of the PAEK resin is preferably 300°C or more, more preferably 320°C or more. The melting point is measured by a differential scanning calorimetry (DSC) device.

The heat-shrinkable tube (covering layer) may contain other components on an as needed basis. Examples of the other components include additives such as a cross-linking agent, an antistatic agent, a thermal stabilizer, a foaming agent, a foam nucleating agent, an antioxidant, a surfactant, a photopolymerization initiator, an anti-friction agent, a surface modifier and a pigment. The content of the other components in a heat-shrinkable tube relative to the mass of the thermoplastic resin in a heat-shrinkable tube is preferably less than 1 mass%, more preferably 0.5 mass% or less, still more preferably 0.1 mass% or less, and the lower limit may be 0 mass% or more, though not limited. In other words, the heat-shrinkable tube may contain no other components.

From the viewpoint of electrical characteristics, the content of the thermoplastic resin in a heat-shrinkable tube (covering layer) is preferably more than 99 mass%, more preferably 99.5 mass% or more, still more preferably 99.9 mass% or more, and the upper limit may be 100 mass% or less, though not limited. In other words, the heat-shrinkable tube may contain a thermoplastic resin only, and in that case, the content of the thermoplastic resin relative to the mass of the heat-shrinkable tube is 100 mass%.

The heat-shrinkable tube may be produced by extrusion forming a thermoplastic resin. Also, the heat-shrinkable tube may be produced by obtaining a tube by extrusion forming a thermoplastic resin and expanding the tube. In the extrusion forming, an extruder may be used. The extruder may be a single-screw extruder or a twin-screw extruder. As the forming conditions for the extrusion forming, conventionally known conditions may be employed. For example, a method that includes heating and melting a thermoplastic resin at a temperature higher than the melting point, and extrusion forming the melted resin may be employed.

The heat-shrinkable tube may be produced, for example, with reference to any of the methods described in the following documents.

(a) A method described in Japanese Patent Laid-Open No. 11-080387, which includes applying internal pressure to an unstretched tube in a stretching tube that regulates the stretching ratio in radial direction.
(b) A production method described in Japanese Patent Laid-Open No. 2011-183800, which includes using a production device of a heat-shrinkable tube, having two pinch rollers, an air supply unit, and a control unit for controlling the expansion of a tube by changing the distance between the two pinch rollers.
(c) A method described in International Publication No. WO 2003/012555, which includes melt-extruding a fluororesin with an extruder having a cyclic die in a discharge port and inserting the fluororesin into a die for cooling installed at the die tip so as to be drawn.
(d) A method described in Japanese Patent Laid-Open No. 2010-125634, which includes extruding a melted material in a tube shape from a mold, and then bringing the inner peripheral surface of the material in a tube shape into contact with the outer peripheral surface of a cooling member in a cylindrical shape so as to be cooled to 170°C or less.

In the case of using a TFE/FAVE copolymer as thermoplastic resin, examples of the simple methods for producing a heat-shrinkable tube include the following method. First, a tube is formed by extrusion forming at a resin temperature of 380°C, and then the resulting tube is inserted into a metal tube having a prescribed inner diameter. The tube is heated to 170°C in an electric oven and then expanded by application of internal pressure of air. On this occasion, the outer diameter can be constant due to regulation of the diameter using the metal tube. The tube is then taken out to be cooled, so that a heat-shrinkable tube is obtained. The shape of the metal tube may be in a cylindrical shape or a quadrangular prism shape.

In the case where the heat-shrinkable tube is produced by expanding a tube, the expansion ratio (magnification ratio) is preferably more than 1.0, more preferably 1.1 or more, still more preferably 1.2 or more, and preferably 50 or less, more preferably 10 or less, still more preferably 5 or less. The expansion ratio may be calculated by dividing the inner diameter of the tube after expansion by the inner diameter of the tube before expansion.

Alternatively, a commercially available product of heat-shrinkable tube may be used. A preferred product has a size larger than the flat conductor to achieve easy insertion, and has a shrinkage factor that allows the tube to be in close contact with the flat conductor through shrinkage after heating.

A flat conductor having at least one bent portion is covered with the heat-shrinkable tube, and the heat-shrinkable tube is heat-shrunk, so that a flat wire having a covering layer formed on the outer periphery of the flat conductor can be produced. In other words, the present disclosure includes the use of the heat-shrinkable tube described above for forming a covering layer that covers a flat conductor having at least one bent portion bent in an edgewise direction.

From the viewpoint of forming a covering layer in further firm contact with the flat conductor, the covering layer is preferably a heat-treated covering layer. The details of the heat treatment are described below.

The inner diameter (inner diameter before shrinkage) of the heat-shrinkable tube is preferably 2 to 65 mm, more preferably 2 to 20 mm. Further, the thickness (thickness before shrinkage) of the heat-shrinkable tube is preferably 0.030 to 0.150 mm, more preferably 0.050 to 0.100 mm.

The heat-shrinkable tube may be shrunk for use at optional shrinkage ratio. It is preferable that the heat-shrinkable tube be shrunk for use, so as to be close contact with a flat conductor having a size described below.

The thickness of the covering layer formed through shrinkage of the heat-shrinkable tube is not limited, and preferably 30 to 150 $\mu$m, more preferably 50 to 100 $\mu$m from the viewpoint of insulation properties.

(Flat conductor)

The shape of the flat conductor to be covered with the heat-shrinkable tube is not limited as long as the cross section thereof is in an approximately rectangular shape of a flat wire. The corner of the cross section of the flat conductor may be at right angle, or the corner of the cross section of the flat conductor may be rounded. Further, although the flat conductor may be a single wire, an assembled wire, or a stranded wire as long as the cross section of the whole conductor has an approximately rectangular shape, a single wire is preferred.

The width of the cross section of the flat conductor may be 1 to 75 mm, and the thickness of the cross section of the flat conductor may be 0.1 to 30 mm. The outer peripheral diameter of the flat conductor may be 6.5 mm or more and 200 mm or less. Further, the ratio of the width to the thickness may be more than 1 and 30 or less.

The flat conductor is not limited as long as it is made of conductive material, and may be made of material such as copper, copper alloy, aluminum, aluminum alloy, iron, silver and nickel. One made of copper or copper alloy is preferred. Alternatively, a conductor plated with silver or nickel may be used. As the copper, an oxygen-free copper, low-oxygen copper, or copper alloy may be used.

(Other layers)

It is preferable that the flat wire include the flat conductor and the coting layer that are in contact with each other. Although a primer layer may be formed between the flat conductor and the covering layer, the flat wire of the present disclosure has a covering layer formed by covering a flat conductor having a bent portions with a heat-shrinkable tube and shrinking the heat-shrinkable tube. Accordingly, without forming a primer layer, the flat conductor and the covering layer are in perfectly close contact without a gap. The formation of a primer layer is not preferable because the dielectric constat increases.

The flat wire of the present disclosure may further include another layer formed on the outer periphery of the covering layer.

Examples of another layer include a layer containing a thermoplastic resin. Examples of the thermoplastic resin include a thermoplastic resin from which the covering layer described above can be formed. As the other layer, a PAEK layer containing a polyaryl ether ketone (PAEK) resin is particularly preferred. The PAEK layer may be formed by covering a flat wire having a covering layer with a heat-shrinkable tube containing a PAEK resin and shrinking the heat-shrinkable tube.

(Use of flat wire)

The flat wire may be used as a coil. Examples of the coil include a stator coil and a rotor coil. For example, a flat wire may be wound around a stator core or a rotor core to form a coil, or after winding a flat wire around, the wound flat wire may be mounted on a stator core or a rotor core. In particular, since the flat wire of the present disclosure has one or more bent portions bent in an edgewise direction, the flat wire is suitably used as a segment coil to be inserted into a slot formed in the stator core or a rotor core. For example, as the segment coil, the flat wire is inserted into a slot and ends of each flat wire are joined to form a coil.

The flat wire and the coil are suitably used for electrical devices and electronic devices such as a motor, a generator and an inductor. Further, the flat wire and the coil can be suitably used for in-vehicle electrical devices and in-vehicle electronic devices such as an in-vehicle motor, an in-vehicle generator and an in-vehicle inductor.

(Method for producing flat wire)

Next, a method for producing the flat wire is described in detail.

The flat wire can be suitably produced, for example, by a production method including forming a flat conductor having a bent portion by bending a flat conductor in an edgewise direction, covering the flat conductor having the bent portion with a heat-shrinkable tube, and shrinking the heat-shrinkable tube to form a covering layer.

The heat-shrinkable tube can be heat-shrunk by heating. The heating temperature for heat-shrinking is preferably 150 to 290°C, more preferably 180°C or more, still more preferably 200°C or more, and more preferably 250°C or less. Further, the heating time for heat-shrinking is preferably 2 to 20 minutes, more preferably 5 minutes or more, and more preferably 15 minutes or less.

In the case where the flat conductor has an approximately U-shape, the flat conductor in an approximately U-shape is covered with a heat-shrinkable tube, and hot air is blown to the flat conductor covered with the heat-shrinkable tube in a state suspended from the top of the flat conductor, in a direction from the top side toward the end side of the flat conductor so as to shrink the heat-shrinkable tube. Thereby, the heat-shrinkable tube can be shrunk while smoothly exhausting the gas present between the flat conductor and the heat-shrinkable tube, so that the flat conductor and the heat-shrinkable tube can be more smoothly in close contact without a gap.

After the covering layer is formed around the flat conductor, the resulting covering layer may be heat-treated. Through the heat treatment of the covering layer, adhesion between the flat conductor and the covering layer can be further enhanced.

The heat treatment may be performed by heating the flat conductor coated with the copolymer in batch processing or continuous processing using a circulating hot air oven or a high-frequency induction heating furnace. Alternatively, the heat treatment may be performed by a salt bath method. In the salt bath method, heating is performed by letting the flat wire pass through a melted salt. Examples of the melted salt include a mixture of potassium nitrate and sodium nitrate.

From the viewpoints of further enhancing the adhesion between the flat conductor and the covering layer and suppressing oxidation of the flat conductor, the heating temperature during the heat treatment is preferably 300 to 360°C, more preferably 320°C or more, and more preferably 350°C or less. Further, the heating temperature during the heat treatment is preferably equal to or more than the melting point of the thermoplastic resin contained in the covering layer, more preferably a temperature more than the melting point of the thermoplastic resin by 15°C or more, and still more preferably a temperature more than the melting point of the thermoplastic resin by 30°C or more.

From the viewpoints of further enhancing the adhesion between the flat conductor and the covering layer and suppressing oxidation of the flat conductor, the time for heat treatment is preferably 0.1 to 5 minutes, more preferably 0.5 minutes or more, and more preferably 3 minutes or less. In the case of heating at high temperatures for a long time, a core wire made of copper may be oxidized and discolored in some cases.

After formation of the covering layer, another layer may be further formed on the outer periphery of the covering layer. For example, by covering a flat wire having a covering layer with a heat-shrinkable tube containing a PAEK resin, and shrinking the heat-shrinkable tube, a PAEK layer can be formed on the outer periphery of the covering layer.

Having described an embodiment in the above, it is understood that various changes in the embodiment and details are possible without departing from the sprit and scope of the claims.

<1> According to a first aspect of the present disclosure, provided is:

a flat wire including a flat conductor having at least one bent portion bent in an edgewise direction and a covering layer formed on the outer periphery of the flat conductor,
wherein the covering layer is formed by covering the flat conductor having bent portion with a heat-shrinkable tube and shrinking the heat-shrinkable tube.

<2> According to a second aspect of the present disclosure, provided is:
the flat wire according to the first aspect, wherein bent portion of the flat conductor and the covering layer are in close contact without a gap.
<3> According to a third aspect of the present disclosure, provided is:

the flat wire according to the first or second aspect,
wherein the flat conductor has an approximately U-shape, and

wherein the covering layer is formed by blowing hot air to the flat conductor covered with the heat-shrinkable tube in a state suspended from the top of the flat conductor, in a direction from the top side toward the end side of the flat conductor so as to shrink the heat-shrinkable tube. <4> According to a fourth aspect of the present disclosure, provided is:

the flat wire according to any of the first to third aspects,
wherein the heat-shrinkable tube comprises at least one fluororesin selected from the group consisting of a copolymer containing tetrafluoroethylene unit and a fluoroalkyl vinyl ether unit and a copolymer containing tetrafluoroethylene unit and hexafluoropropylene unit.

<5> According to a fifth aspect of the present disclosure, provided is:

the flat wire according to any of the first to fourth aspects,
wherein the heat-shrinkable tube comprises a copolymer containing tetrafluoroethylene unit and a fluoroalkyl vinyl ether unit as a fluororesin, and the copolymer has a fluoroalkyl vinyl ether unit content of 0.4 to 4.0 mol% relative to all monomer units.

<6> According to a sixth aspect of the present disclosure, provided is:
the flat wire according to any of the fourth or fifth aspect, wherein the fluororesin has a melt flow rate of 0.1 to 70 g/10 minutes.
<7> According to a seventh aspect of the present disclosure, provided is:
the flat wire according to any of the fourth to sixth aspects, wherein the fluororesin has a melt flow rate of less than 10 g/10 minutes.
<8> According to an eighth aspect of the present disclosure, provided is:

the flat wire according to any of the fourth to seventh aspects,
wherein the fluororesin has a functional group, and the number of functional groups of the fluororesin is 5 to 1,300 per $10^6$ carbon atoms.

<9> According to a ninth aspect of the present disclosure, provided is:

the flat wire according to any of the first to eighth aspects,
further comprising a PAEK layer containing a polyaryl ether ketone (PAEK) resin on the outer periphery of the covering layer formed of the heat-shrinkable tube.

<10> According to a tenth aspect of the present disclosure, provided is:
a coil comprising the flat wire according to any of the first to ninth aspects.
<11> According to an eleventh aspect of the present disclosure, provided is:
a method for producing the flat wire according to any of the first to tenth aspects, comprising:

bending the flat conductor in an edgewise direction to form the flat conductor having the bent portion; and covering the flat conductor having the bent portion with the heat-shrinkable tube and shrinking the heat-shrinkable tube to form the covering layer.

<12> According to a twelfth aspect of the present disclosure, provided is:

the production method according to the eleventh aspect, wherein the flat conductor in an approximately U-shape having the bent portion is formed by bending the flat conductor in an edgewise direction, and
wherein the covering layer is formed by covering the flat conductor in an approximately U-shape having the bent portion with the heat-shrinkable tube, and blowing hot air to the flat conductor covered with the heat-shrinkable tube in a state suspended from the top of the flat conductor, in a direction from the top side toward the end side of the flat conductor so as to shrink the heat-shrinkable tube.

<13> According to a thirteenth aspect of the present disclosure, provided is:
the production method according to the eleventh or twelfth aspect, further comprising heat-treating the covering layer formed.
<14> According to a fourteenth aspect of the present disclosure, provided is:

the production method according to any of the eleventh to thirteenth aspects,

comprising, after formation of the covering layer, covering the resulting flat wire with a heat-shrinkable tube containing a polyaryl ether ketone (PAEK) resin, and shrinking the heat-shrinkable tube to form a PAEK layer.

<15> According to a fifteenth aspect of the present disclosure, provided is:

a heat-shrinkable tube for use in forming a covering layer that covers a flat conductor having at least one bent portion bent in an edgewise direction.

<16> According to a sixteenth aspect of the present disclosure, provided is:

the heat-shrinkable tube according to the fifteenth aspect comprising at least one fluororesin selected from the group consisting of a copolymer containing tetrafluoroethylene unit and a fluoroalkyl vinyl ether unit and a copolymer containing tetrafluoroethylene unit and hexafluoropropylene unit.

<17> According to a seventeenth aspect of the present disclosure, provided is:

the heat-shrinkable tube according to the fifteenth or sixteenth aspect, wherein the heat-shrinkable tube comprises a copolymer containing tetrafluoroethylene unit and a fluoroalkyl vinyl ether unit as fluororesin, and the copolymer has a fluoroalkyl vinyl ether unit content of 0.4 to 4.0 mol% relative to all monomer units.

<18> According to an eighteenth aspect of the present disclosure, provided is:

the heat-shrinkable tube according to the sixteenth or seventeenth aspect, wherein the fluororesin has a melt flow rate of 0.1 to 70 g/10 minutes.

<19> According to a nineteenth aspect of the present disclosure, provided is:

the heat-shrinkable tube according to any of the sixteenth to eighteenth aspects, wherein the fluororesin has a melt flow rate of less than 10 g/10 minutes.

<20> According to a twentieth aspect of the present disclosure, provided is:

the heat-shrinkable tube according to any of the sixteenth to nineteenth aspects, wherein the fluororesin has a functional group, and the number of functional groups of the fluororesin is 5 to 1,300 per 1,000,000 carbon atoms.

EXAMPLES

Next, an embodiment of the present disclosure is described with reference to Examples, though the present disclosure is not limited to the Examples only.

(Melt flow rate (MFR))

According to ASTM D1238, using a melt indexer (manufactured by Yasuda Seiki Seisakusho, Ltd.), a mass of the copolymer flowing out from a nozzle having an inner diameter of 2.1 mm and a length of 8 mm at 372°C under a load of 5 kg per 10 minutes (g/10 minutes) was determined.

(Composition of fluororesin)

The measurement was performed by $^{19}$F-NMR method.

(Melting point)

The melting point was determined as the temperature corresponding to the maximum value of the heat-of-fusion curve at a temperature raising rate of 10°C/minute using a differential scanning calorimeter [DSC].

(Number of functional group)

A fluororesin was melted at 330 to 340°C for 30 minutes and compression molded to make a film having a thickness of 0.20 to 0.25 mm. The film was scanned 40 times by a Fourie-transform infrared spectroscopy (FT-IR (trade name: 1760X type, manufactured by PerkinElmer, Inc.) to obtain an infrared absorption spectrum through analysis. A differential spectrum, which is a difference from a base spectrum of a completely fluorinated resin having no functional group, was obtained. From the absorption peak of a specific functional group appearing in the differential spectrum, the number N of the functional groups per $10^6$ carbon atoms in the fluororesin was calculated according to the following formula (A).

$$N = I \times K / t \qquad (A)$$

I:      absorbance
K:      correction coefficient
T:      film thickness (mm)

For reference sake, the absorption frequency, molar absorption coefficient and correction coefficient of the functional groups of the present disclosure are shown in Table 2. Incidentally, the molar absorption coefficient was determined from the FT-IR measurement data of a low molecular weight model compound.

[Table 2]

Table 2

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

<Edgewise processing test>

(Covering thickness)

One end having a length of 10 mm was cut from a straight portion of the flat magnet wire after heat treatment to collect an electric wire sample, which was then consolidated with a curing agent and the cross section was polished.
The cross section of the sample was magnified 50 times by a video microscope (Keyence VHX-S660) to measure the thickness at three places each of top, bottom, left and right spots (12 spots in total). The average was calculated as the covering thickness.

(Inside state of bent portion (bulging))

A protrusion part 14 was visually checked whether having a bulge of covering.

    Poor: A bulge was observed inside of bent portion.
    Good: No bulge was observed inside of bent portion.

(Inside state of bent portion (gap))

The presence of gap inside of the protrusion part 14 was checked with a magnifying glass. The magnification ratio was 5.

    Poor: A gap was observed inside of bent portion.
    Good: No gap was observed inside of bent portion.

(Outside state of bent portion (crack))

The protrusion part 14 was visually checked whether having a crack in the covering.

    Poor: A crack was observed outside of bent portion.

14

Good: No crack was observed outside of bent portion.

(Outside state of bent portion (gap))

The presence of gap outside of the protrusion part 14 was checked with a magnifying glass. The magnification ratio was 5.

Poor: A gap was observed outside of bent portion.
Good: No gap was observed outside of bent portion.

(Partial discharge inception voltage (PDIV) after bending)

The measurement was performed as follows using a partial discharge voltage measuring device (DAC-PD-7 manufactured by Soken Electric Co., Ltd.). The surfaces each including a long side of the cross section of two flat magnet wires after bending were superposed without a gap to make a test piece. A 50-Hz sine wave alternating voltage was applied between the two conductors for the measurement. With a voltage raising rate set to 50 V/sec, a voltage lowering rate set to 50 V/sec and a voltage retention time set to 0 sec, the voltage at an occurrence time of discharge of 10 pC or more was defined as partial discharge inception voltage.

<Method for forming tube>

The heat-shrinkable tube for use in Examples and Comparative Examples were prepared by the following method. A tetrafluoroethylene (TFE)/perfluoro(propyl vinyl ether) (PPVE) copolymer having characteristics described in Table 3 was extrusion molded with a tube extruder (cylinder axis diameter: 50 mm, L/D=22) at a die temperature of 380°C and a drawing rate of 0.6 m/minute, so that a tube having an external diameter of 3.20 mm and an inner diameter of 3.05 mm was obtained. The tube was inserted into a metal tube with a prescribed diameter, and thermally expanded with air pressure in an electric oven set at 170°C. The tube was immediately taken out from the electric oven and water-cooled to room temperature. Thereby, a heat-shrinkable tube having an outer diameter of 4.00 mm and an inner diameter of 3.80 mm was formed.

Comparative Example 1

Into the resulting heat-shrinkable tube, a flat conductor (flat copper wire, thickness: 2.00 mm, width: 3.40 mm, having no bent portion) was inserted. The heat-shrinkable tube was then heated to be shrunk at 200°C for 5 minutes with a heat gun, so that a flat magnet wire having a covering layer in close contact with the outer surface of the flat conductor was prepared.

Further, the resulting flat magnet wire was heat-treated in a circulating hot air oven under conditions at 330°C for 1 minute. The covering layer of the flat magnet wire after heat treatment had a thickness of about 81 μm.

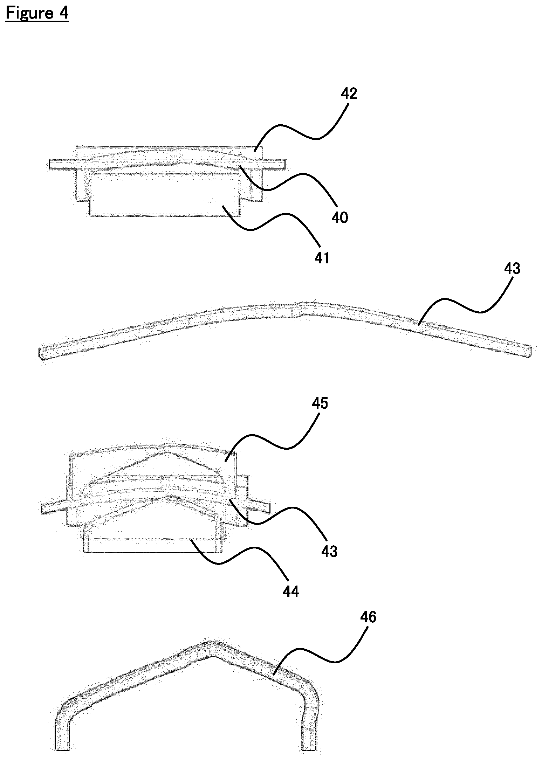

As shown in Figure 4, using a method including a step 1 and a step 2, the heat-treated flat magnet wire was processed. In the step 1, a flat magnet wire 40 was placed on a mold 41, and a load of 1 MPa was applied to the flat magnet wire 40 with a mold 42, so that a flat magnet wire 43 bent in a flatwise direction and an edgewise direction was obtained. In the step 2, the flat magnet wire 43 was placed on a mold 44, and a load of 1 MPa was applied to the flat magnet wire 43 with a mold 45, so that a flat magnet wire 46 bent in a flatwise direction and an edgewise direction was obtained.

Through observation of the flat magnet wire 46 with a magnifying glass, a gap was observed between the flat conductor inside of the protrusion part 14 (inner periphery of the bent portion bent in edgewise direction) and the covering layer.

Comparative Examples 2 to 3

A flat magnet wire was prepared in the same manner as in Comparative Example 1, except that the copolymer was changed to a copolymer having characteristics described in Table 3. The resulting flat magnet wire was evaluated by the method described above. The results are shown in Table 3.

Through observation of the flat magnet wire with a magnifying glass, a gap was observed between the flat conductor inside of the protrusion part 14 (inner periphery of the bent portion bent in edgewise direction) and the covering layer.

Example 1

A conductor 46 bent in a flatwise direction and an edgewise direction (flat conductor having no covering layer) was obtained in the same manner as in Comparative Example 1, except that a flat conductor (thickness: 2.0 mm, width: 3.40 mm, having no bent portion) was used instead of a heat-treated flat magnet wire having a covering layer.

Into the resulting heat-shrinkable tube, the resulting flat conductor 46 after bending was inserted. The heat-shrinkable tube was then heated to be shrunk at 200°C for 5 minutes with a heat gun, so that a flat magnet wire having a covering layer in close contact with the outer surface of the flat conductor was prepared.

Further, the resulting flat magnet wire was heat-treated in a circulating hot air oven under conditions at 330°C for 1 minute. The covering layer of the flat magnet wire after heat treatment had a thickness of about 81 $\mu$m.

The resulting flat magnet wire had no gap in any portions. Further, the PDIV was higher by about 10% than those in Comparative Examples.

Examples 2 to 3

A flat magnet wire was prepared in the same manner as in Example 1, except that the copolymer was changed to a copolymer having properties described in Table 3. The resulting flat magnet wire was evaluated by the method described above. The results are shown in Table 3.

The resulting flat magnet wire in any of Examples had no gap in any portions. Further, the PDIV was higher by about 10% than those in Comparative Examples.

In Table 3, the description "COOH+COF (/1,000,000 C)" represents the total of -COOH and -COF at an end of the main chain of the copolymer relative to $10^6$ carbon atoms of the copolymer. Further, the description "COOH+COF+CH$_2$OH+CF$_2$H+CO$_2$CH$_3$ (/1,000,000 C)" represents the total of -COOH, -COF, -CH$_2$OH,-CF$_2$H and -CO$_2$CH$_3$ at an end of the main chain of the copolymer relative to $10^6$ carbon atoms of the copolymer.

[Table 3]

Table 3

| | | | Example 1 | Example 2 | Example 3 | Comparative Example 1 | Comparative Example 2 | Comparative Example 3 |
|---|---|---|---|---|---|---|---|---|
| Properties of copolymer | MFR (g/10 minutes) | | 25.0 | 14.8 | 2.0 | 25.0 | 14.8 | 2.0 |
| | TFE/PPVE(mole%) | | 98.0/2.0 | 98.5/1.5 | 98.7/1.3 | 98.0/2.0 | 98.5/1.5 | 98.7/1.3 |
| | Melting point (°C) | | 296 | 305 | 307 | 296 | 305 | 307 |
| | COOH (/1,000,000 C) | | 32 | 10 | 18 | 32 | 10 | 18 |
| | COF (/1,000,000 C) | | 30 | 29 | 32 | 30 | 29 | 32 |
| | COOH+COF (/1,000,000 C) | | 62 | 39 | 50 | 62 | 39 | 50 |
| | COOH+COF+CH$_2$OH+CF$_2$H+CO$_2$CH$_3$ (/1,000,000 C) | | 591 | 422 | 22 | 591 | 422 | 22 |
| Shrinkable tube (Inner diameter (mm)/Wall thickness (mm), Shrinkage rate (%)) | | | 3.8/0.1/25 | 3.8/0.1/25 | 3.8/0.1/20 | 3.8/0.1/25 | 3.8/0.1/25 | 3.8/0.1/20 |
| Flat conductor (Thickness (mm)/Width (mm)) | | | 2.0/3.4 | 2.0/3.4 | 2.0/3.4 | 2.0/3.4 | 2.0/3.4 | 2.0/3.4 |
| Timing of covering with shrinkable tube in edgewise bending | | | After bending | After bending | After bending | Before bending | Before bending | Before bending |
| Heat shrinkage conditions | Shrinkage temperature (°C) | | 200 | 200 | 200 | 200 | 200 | 200 |
| | Heating time (minute) | | 5 | 5 | 5 | 5 | 5 | 5 |
| Heat treatment conditions | Circulating hot air oven temperature (°C) | | 330 | 330 | 330 | 330 | 330 | 330 |
| | Heating time (minute) | | 1 | 1 | 1 | 1 | 1 | 1 |
| Properties of flat magnet wire | Coating thickness (μm) | | 81 | 81 | 82 | 81 | 82 | 82 |
| | Inside state of bent portion | Bulging | Good | Good | Good | Good | Good | Good |
| | | Gap | Good | Good | Good | Poor | Poor | Poor |
| | Outside state of bent portion | Crack | Good | Good | Good | Good | Good | Good |
| | | Gap | Good | Good | Good | Good | Good | Good |
| | PDIV (V) after bending | | 1927 | 1856 | 1948 | 1753 | 1698 | 1784 |

REFERENCE SIGNS LIST

100: Flat wire

11: Curved part
12: Slot insertion part
13a, 13b: Shoulder part
14: Protrusion part
15: Crank-shaped part

21: Flat conductor
22: Covering layer
30: Heat-shrinkable tube
31: Hollow
40: Flat magnet wire or Flat conductor
41: Mold
42: Mold
43: Flat magnet wire or Flat conductor
44: Mold
45: Mold
46: Flat magnet wire or Flat conductor

**Claims**

1. A flat wire comprising a flat conductor having at least one bent portion bent in an edgewise direction and a covering layer formed on the outer periphery of the flat conductor,
   wherein the covering layer is formed by covering the flat conductor having the bent portion with a heat-shrinkable tube and shrinking the heat-shrinkable tube.

2. The flat wire according to claim 1, wherein the bent portion of the flat conductor and the covering layer are in close contact without a gap.

3. The flat wire according to claim 1 or 2,

   wherein the flat conductor has an approximately U-shape, and
   wherein the covering layer is formed by blowing hot air to the flat conductor covered with the heat-shrinkable tube in a state suspended from the top of the flat conductor, in a direction from the top side toward the end side of the flat conductor so as to shrink the heat-shrinkable tube.

4. The flat wire according to any of claims 1 to 3, wherein the heat-shrinkable tube comprises at least one fluororesin selected from the group consisting of a copolymer containing tetrafluoroethylene unit and a fluoroalkyl vinyl ether unit and a copolymer containing tetrafluoroethylene unit and hexafluoropropylene unit.

5. The flat wire according to any of claims 1 to 4, wherein the heat-shrinkable tube comprises a copolymer containing tetrafluoroethylene unit and a fluoroalkyl vinyl ether unit as a fluororesin, and the copolymer has a fluoroalkyl vinyl ether unit content of 0.4 to 4.0 mol% relative to all monomer units.

6. The flat wire according to claim 4 or 5, wherein the fluororesin has a melt flow rate of 0.1 to 70 g/10 minutes.

7. The flat wire according to any of claims 4 to 6, wherein the fluororesin has a melt flow rate of less than 10 g/10 minutes.

8. The flat wire according to any of claims 4 to 7, wherein the fluororesin has a functional group, and the number of functional groups of the fluororesin is 5 to 1,300 per 1,000,000 carbon atoms.

9. The flat wire according to any of claims 1 to 8, further comprising a PAEK layer containing a polyaryl ether ketone (PAEK) resin on the outer periphery of the covering layer formed of the heat-shrinkable tube.

10. A coil comprising the flat wire according to any of claims 1 to 9.

11. A method for producing the flat wire according to any of claims 1 to 10, comprising:

bending the flat conductor in an edgewise direction to form the flat conductor having the bent portion; and covering the flat conductor having the bent portion with the heat-shrinkable tube and shrinking the heat-shrinkable tube to form the covering layer.

12. The production method according to claim 11,

wherein the flat conductor in an approximately U-shape having the bent portion is formed by bending the flat conductor in an edgewise direction, and

wherein the covering layer is formed by covering the flat conductor in an approximately U-shape having the bent portion with the heat-shrinkable tube, and blowing hot air to the flat conductor covered with the heat-shrinkable tube in a state suspended from the top of the flat conductor, in a direction from the top side toward the end side of the flat conductor so as to shrink the heat-shrinkable tube.

13. The production method according to claim 11 or 12, further comprising heat-treating the covering layer formed.

14. The production method according to any of claims 11 to 13, comprising, after formation of the covering layer, covering the resulting flat wire with a heat-shrinkable tube containing a polyaryl ether ketone (PAEK) resin, and shrinking the heat-shrinkable tube to form a PAEK layer.

15. A heat-shrinkable tube for use in forming a covering layer that covers a flat conductor having at least one bent portion bent in an edgewise direction.

16. The heat-shrinkable tube according to claim 15, wherein the heat-shrinkable tube comprises at least one fluororesin selected from the group consisting of a copolymer containing tetrafluoroethylene unit and a fluoroalkyl vinyl ether unit and a copolymer containing tetrafluoroethylene unit and hexafluoropropylene unit.

17. The heat-shrinkable tube according to claim 15 or 16, wherein the heat-shrinkable tube comprises a copolymer containing tetrafluoroethylene unit and a fluoroalkyl vinyl ether unit as a fluororesin, and the copolymer has a fluoroalkyl vinyl ether unit content of 0.4 to 4.0 mol% relative to all monomer units.

18. The heat-shrinkable tube according to claim 16 or 17, wherein the fluororesin has a melt flow rate of 0.1 to 70 g/10 minutes.

19. The heat-shrinkable tube according to any of claims 16 to 18, wherein the fluororesin has a melt flow rate of less than 10 g/10 minutes.

20. The heat-shrinkable tube according to any of claims 16 to 19, wherein the fluororesin has a functional group, and the number of functional groups of the fluororesin is 5 to 1,300 per 1,000,000 carbon atoms.

Figure 1

Figure 2

Figure 3

## Figure 4

**INTERNATIONAL SEARCH REPORT**

| International application No. |
|---|
| **PCT/JP2023/024439** |

### A. CLASSIFICATION OF SUBJECT MATTER

*H01F 5/06*(2006.01)i; *H01F 5/00*(2006.01)i; *H02K 3/38*(2006.01)i
FI: H01F5/06 H; H02K3/38 Z; H01F5/00 D; H01F5/06 Q

According to International Patent Classification (IPC) or to both national classification and IPC

### B. FIELDS SEARCHED

Minimum documentation searched (classification system followed by classification symbols)

H01F5/06; H01F5/00; H02K3/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2022/004298 A1 (PANASONIC INTELLECTUAL PROPERTY MANAGEMENT CO., LTD.) 06 January 2022 (2022-01-06) paragraphs [0014], [0054]-[0059], fig. 4 | 1-3, 10-12, 15 |
| Y | | 4-9, 13-14 |
| X | JP 2021-2458 A (DAIKIN IND., LTD.) 07 January 2021 (2021-01-07) paragraphs [0024]-[0026], [0028], [0043], [0061]-[0064] | 15-20 |
| Y | | 4-9, 13-14 |
| A | WO 2017/175516 A1 (FURUKAWA ELECTRIC CO., LTD.) 12 October 2017 (2017-10-12) paragraphs [0041]-[0044], [0077], fig. 3 | 3, 9, 12, 14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 August 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2023/024439**

| Patent document cited in search report | | | Publication date (day/month/year) | Patent family member(s) | | | Publication date (day/month/year) |
|---|---|---|---|---|---|---|---|
| WO | 2022/004298 | A1 | 06 January 2022 | CN 115867995 A paragraphs [0024], [0071]-[0077], fig. 4 | | | |
| JP | 2021-2458 | A | 07 January 2021 | (Family: none) | | | |
| WO | 2017/175516 | A1 | 12 October 2017 | US 2019/0027271 A1 paragraphs [0086]-[0091], [0145], fig. 3 EP 3441983 A1 KR 10-2018-0131540 A CN 109074909 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017175516 A
- JP 2021002458 A
- JP 2006152234 A
- WO 2017122743 A
- JP 11080387 A
- JP 2011183800 A
- WO 2003012555 A
- JP 2010125634 A